# EUROPEAN PATENT APPLICATION

(11) **EP 1 207 309 A2**
(43) Date of publication of application: **22.05.2002**
(21) Application number: 01126229.2
(22) Date of filing: 05.11.2001
(51) Int. Cl.: F04D 19/04, H02K 16/00, H02K 7/14

(54) **A compound motor and operational method thereof**

(30) Priority: 07.11.2000 JP 2000339199
(71) Applicant: EBARA CORPORATION, Ohta-ku, Tokyo (JP)
(72) Inventor: Taira, Akiko, Fujisawa-shi, Kanagawa-ken (JP); Ooyama, Atsushi, Fujisawa-shi, Kanagawa-ken (JP)
(74) Representative: Wagner, Karl H., Dipl.-Ing.

(57) **Abstract**

A compound motor comprising a plurality of motors (20,30,40), each motor comprising a rotating member (23,33,43) that is rotatably supported and a stator winding (24,34,44), wherein all rotating members share the same axis of rotation and the stator winding of each motor has a different number of poles.

## Description

### BACKGROUND OF THE INVENTION

### Field of the Invention:

The present invention relates to a compound motor having a plurality of motors arranged along the same axis of rotation, and particularly to the construction and operating method for a rotating electrical machine appropriate for use in turbo-molecular pumps.

### Description of the Related Art:

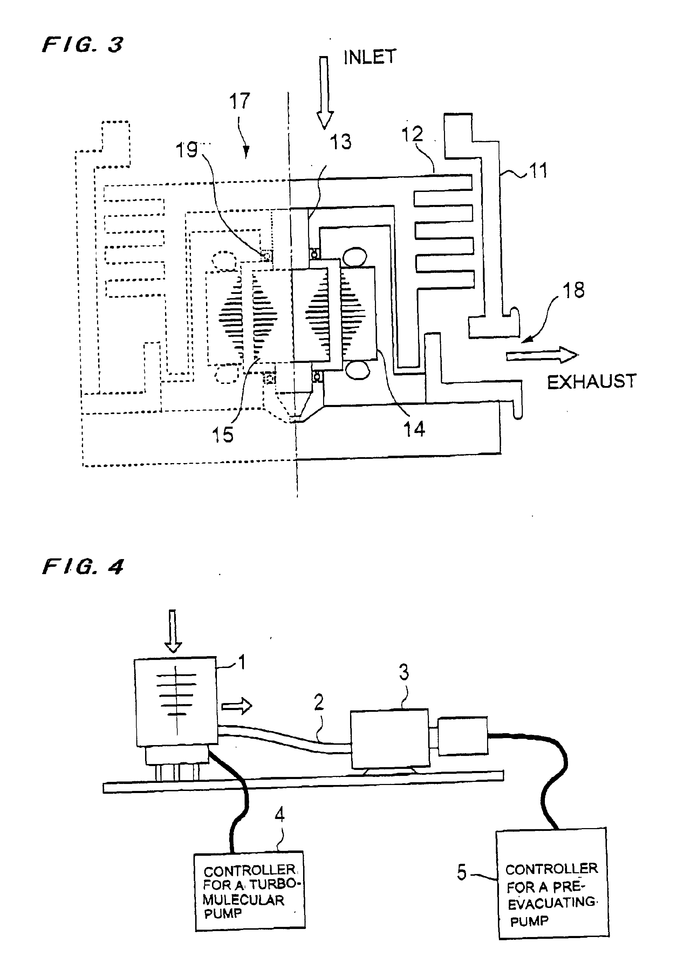

FIG. 3 shows an example construction of a conventional turbo-molecular pump. A turbo-molecular pump is a vacuum pump designed to evacuate a vessel to the molecular flow range. Evacuation is performed by the interaction between rotor blades fixed to a rotating member and rotated by an ultrafast rotating mechanism and stator blades disposed on the stationary part of the pump. This type of vacuum pump is suitable for generating ultrahigh vacuum conditions.

As shown in FIG. 3, the turbo-molecular pump comprises a pump casing 11 and a rotating member 13 accommodated in the casing 11. The rotating member 13 is rotatably supported by bearings 19 and comprises rotor blades 12 and a rotor 15 disposed along the rotating meaner's axis of rotation. A stator 14 forms a rotating magnetic field for driving the rotor 15 to rotate. The rotor 15 in turn drives the rotating member 13 to rotate. By driving the rotating member 13 to rotate at an ultrafast speed, the vacuum pump can evacuate a vessel up to the ultrahigh vacuum region. While the capacity for evacuation is determined by the volume of the turbo-molecular pump, the targeted amount of gas to be evacuated, and the shape of the blades, the motor that drives the rotor blades 12 to rotate generally must rotate as fast as tens of thousands of revolutions per minute.

Generally the motor for driving the rotor blades of a turbo-molecular pump is designed to operate under internal gas pressures ranging from the molecular-flow region to an intermediate-flow region between molecular flow and atmospheric pressure. However, operating these pumps under the viscous-flow region of atmospheric pressure is not practical because such high rotational speeds would overload the pump.

In a system, such as that shown in FIG. 4, designed to evacuate vessels to the region of ultrahigh vacuum, one end of a tubing 2 is connected to the exhaust of a turbo-molecular pump 1 and the other end is connected to a pre-evacuating pump 3, such as an oil vacuum pump or dry vacuum pump. The turbo-molecular pump 1 is operated after first performing a pre-evacuating operation to avoid overloading the motor that drives the turbo-molecular pump. The motor of the turbo-molecular pump is then accelerated to a rated rotational speed to perform evacuation up to the ultrahigh vacuum region. Accordingly, an evacuating system designed for generating an ultrahigh vacuum region requires the pre-evacuating pump 3 for performing evacuating operations under atmospheric pressure. As a result, the construction of the vacuum pump becomes complex, requiring a controller 5 for controlling the pre-evacuating pump 3 and the tubing 2 for connecting the pre-evacuating pump 3 to the turbo-molecular pump 1. Such a complex system also takes up more space.

To avoid these problems, a compound turbo-molecular pump was proposed for performing evacuation under all pressure regions from atmospheric pressure to ultrahigh vacuum pressure by combining a plurality of turbo-molecular pumps having different rotational speeds. However, this type of compound turbo-molecular pump requires a controller and a power source for each pump to control overall operations of the pump system, thereby increasing the overall size of the apparatus and inevitably resulting in higher costs for the system.

### SUMMARY OF THE INVENTION

In view of the foregoing, it is an object of the present invention to provide a compact turbo-molecular pump capable of performing evacuation from the ultrahigh vacuum region to the viscous-flow region of atmospheric pressure. It is another object of the present invention to provide a compound motor and method of operating the same that are suitable for driving the turbo-molecular pump.

These objects and others will be attained by a compound motor comprising a plurality of motors, each motor comprising a rotating member that is rotatably supported and a stator winding. All rotating members share the same axis of rotation, and the stator winding of each motor has a different number of poles. With this construction, the motors can be driven to rotate at fixed speed ratios by supplying a common power to the stator windings in each motor.

Further, the plurality of motors are disposed along the rotational axis in order of number of poles from the lowest to the highest, and the stator winding of each motor is connected in parallel to a common power circuit. By providing turbo blades or axial-flow blades on the rotating members driven by the motors, the system can evacuate an ultrahigh vacuum region using highspeed rotations, an intermediate region using medium-speed rotations, and an atmospheric pressure region using low-speed rotations.

Further, each rotating member is rotatably supported by bearings and can rotate independently of one another. This configuration enables the construction of a compact compound motor.

According to another aspect of the present invention, a vacuum pump has an inlet and an exhaust and comprises a plurality of motors. Each motor comprises a rotating member that is rotatably supported, a stator winding, and blades disposed on the rotating member for evacuation. All rotating members share the same axis of rotation and can rotate independently of one another. The stator winding of each motor has a different number of poles and is connected to a common power circuit. Further, the plurality of motors is arranged from the inlet to the exhaust in order of number of poles from the lowest to the highest.

According to another aspect of the present invention, a method for operating a compound motor comprises; arranging a plurality of motors with differing numbers of stator poles such that the motors share the same axis of rotation; connecting the stator windings of each motor in parallel to a single power circuit capable of supplying an exciting current to the stator windings; and operating the plurality of motors at the speed ratios fixed by the differing rotational speeds of each motor by supplying an exciting current of a prescribed frequency to each motor simultaneously.

Since the stator winding of each motor in this construction has a different number of poles, each motor rotates at a different corresponding rotational speed when power having a common frequency is supplied to each motor. Therefore, the rotor blades disposed on the rotating members of the motors can evacuate different vacuum regions. Hence, a single turbo-molecular pump can be used to evacuate vessels from an ultrahigh vacuum region to a region under atmospheric pressure. Since the motors of this turbo-molecular pump can be driven by a single power source, it is possible to maintain fixed speed ratios as the motors are accelerated from a rotational speed of 0 to their rated speeds. Accordingly, a turbo-molecular pump employing the compound motor of the present invention can achieve a compact and economical evacuating system capable of evacuating all regions from the ultrahigh vacuum region to the atmospheric pressure region.

The above and other objects, features, and advantages of the present invention will be apparent from the following description when taken in conjunction with the accompanying drawings which illustrates preferred embodiments of the present invention by way of example.

### BRIEF DESCRIPTION OF THE DRAWINGS

FIG. 1 shows an example construction of a turbo-molecular pump employing a compound motor according to the preferred embodiment of the present invention;
FIG. 2 shows an example construction of an evacuating system employing the turbo-molecular pump of FIG. 1;
FIG. 3 shows an example construction of a conventional turbo-molecular pump; and
FIG. 4 shows an example construction of an evacuating system employing the conventional turbo-molecular pump of FIG. 3.

### DETAILED DESCRIPTION OF THE PREFERRED EMBODIMENTS

A compound motor according to a preferred embodiment of the present invention will be described while referring to the accompanying drawings.

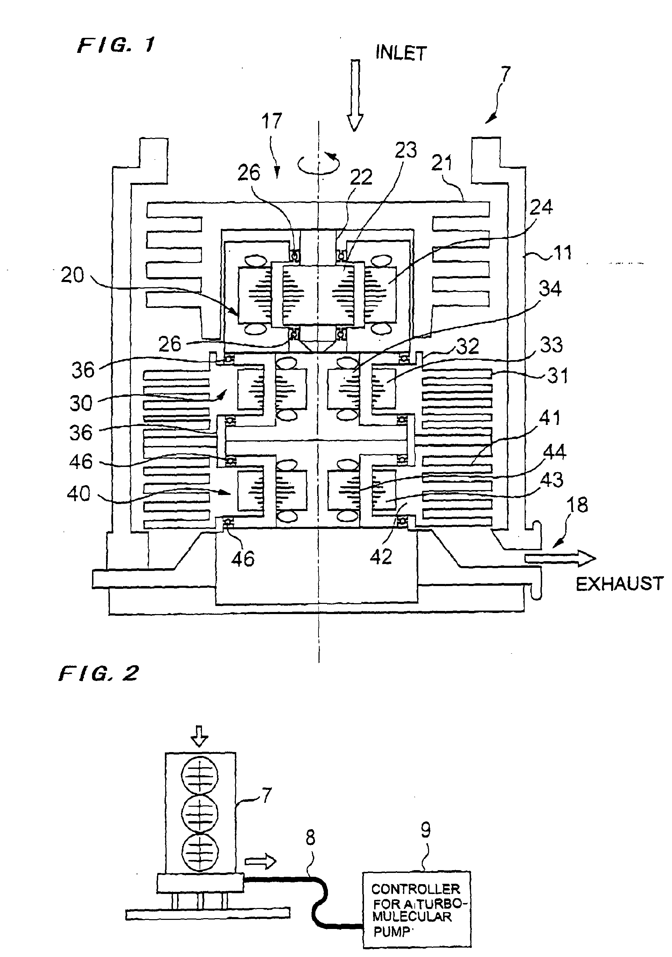

FIG. 1 shows an example of a compound motor according to the present invention applied to a turbo-molecular pump. The turbo-molecular pump includes a compound motor housed in a casing 11. The casing is provided with an intake port 17 and a discharge port 18. The compound motor comprises a first motor 20 on the intake port 17 end of the casing 11, a third motor 40 on the discharge port 18 end, and a second motor 30 disposed between the first motor 20 and third motor 40. The first motor 20 includes a rotor 23 and a stator 24 for driving the rotor 23 to rotate. A rotating member 22 having blades 21 is connected to the rotor 23. The second motor 30 includes a rotor 33 and a stator 34 for driving the rotor 33 to rotate. A rotating member 32 having blades 31 is connected to the rotor 33. The third motor 40 includes a rotor 43 and a stator 44 for driving the rotor 43 to rotate. A rotating member 42 having blades 41 is connected to the rotor 43.

The motors 20, 30, and 40 are positioned such that the rotating members 22, 32, and 42 share the same axis of rotation. Accordingly, the rotors 23, 33, and 43 also share the same axis of rotation. The three motors are further provided with bearings 26, 36, and 46, respectively, for fixing the rotating member of each motor on the above axis of rotation, while allowing the rotors to rotate. As the first motor 20 is an inner rotor type motor, the rotor 23 is disposed inside the stator 24, while the rotating member 22 is rotatably supported by the bearings 26. The second motor 30 is an outer rotor type motor, such that the rotor 33 is disposed outside the stator 34, while the rotating member 32 is rotatably supported by the bearings 36. Similarly, the third motor 40 is an outer rotor type motor, wherein the rotor 43 is disposed outside the stator 44, while the rotating member 42 is rotatably supported by the bearings 46. In this way, the three motors 20, 30, and 40 are positioned to share the same rotational axis and allowed to move only in a rotating direction, thereby achieving an overall compact construction.

Here, the stator winding of each motor has a different number of poles. For example, the first motor 20, which is closest to the intake port 17, has a two-pole stator winding; the second motor 30 a six-pole stator winding; and the third motor 40, nearest the discharge port 18, a twelve-pole stator winding. By introducing AC power having a common frequency, such as 500 Hz, into the stator winding of each motor, the rotor in the first motor 20 (two poles) will rotate at 30,000 revolutions per minute (rpm). The rotor of the second motor 30 (six poles) will rotate at 10,000 rpm. The rotor of the third motor 40 (twelve poles) will rotate at 5,000 rpm.

In the turbo-molecular pump of the preferred embodiment, the motors are arranged in order of increasing rotational speeds from the discharge port 18 toward the intake port 17. The blades 21 fixed to the first motor 20 are formed in an appropriate shape for discharging gases at the molecular flow level under the region of ultrahigh vacuum. The blades 41 fixed to the third motor 40 have a shape appropriate for exhausting gases under a pressure up to atmospheric pressure, which is the viscous-flow region, since the discharge side of the blades 41 is adjacent to the discharge port 18. The blades 31 fixed to the second motor 30 have an appropriate shape for discharging gases in an intermediate region between the ultrahigh vacuum region and the atmospheric pressure region. Turbo blades or equivalent axial-flow blades are provided on each rotating member.

When an AC voltage is applied to each stator winding at the same frequency, the rotors and blades fixed to the rotors rotate at the speed corresponding to the number of stator poles in the respective motor. Hence, it is possible to discharge gases from the discharge port 18 under atmospheric pressure, while maintaining evacuation near the intake port 17 in the ultrahigh-vacuum region. A frequency controller, such as an inverter, is used at startup to raise the initial rotational speed of the motors from 0 to the rated speed of the motors. with this construction, it is possible to start the pump while the load end is under atmospheric pressure. In other words, by raising the rotational speed of each motor from 0 according to the speed ratio of the motors, this turbo-molecular pump can be employed to evacuate a target vessel in a state of atmospheric pressure. By raising the rotational speed of the motors, the targeted vessel can be evacuated until reaching a state of ultrahigh vacuum while keeping the discharge port in the state of atmospheric pressure.

FIG. 2 shows an example construction of an evacuating system employing the above-described turbo-molecular pump. As shown in the diagram, a turbo-molecular pump 7 is connected to a controller 9 designed for a turbo-molecular pump by wiring cable 8. The controller 9 is provided with a frequency/voltage-variable power source, such as an inverter, for supplying AC power of a common frequency and voltage to the stator windings in each of the motors 20, 30, and 40 of the turbo-molecular pump 7. As each motor in the turbo-molecular pump 7 operates at a rotational speed corresponding to the speed ratio of the motor, the turbo-molecular pump 7 can perform an evacuation operation with an ultrahigh vacuum region on the inlet and an atmospheric pressure region on the exhaust end. Since the rotational speed of the motors are increased from an initial speed of 0 in this operation, the turbo-molecular pump can evacuate a targeted vessel, even when the vessel is in a state of atmospheric pressure, as described above. Accordingly, the present invention eliminates the need for the pre-evacuating pump 3 and the associated controller 5 for the pre-evacuating pump 3, which are shown in FIG. 4, as well as the tubing 2 and the like used to connect the turbo-molecular pump 1 to the pre-evacuating pump 3.

In the embodiment described above, the compound motor of the present invention is applied to a turbo-molecular pump. In this example, the compound motor provided in the turbo-molecular pump comprises a plurality of motors that rotate independently along the same axis of rotation. The motors are arranged in order of speed ratios from high to low or from low to high. However, this compound motor can similarly be applied to fluid machinery of another form, such as a vacuum pump or the like.

By applying the compound motor of the present invention to a turbo-molecular pump, as described above, it is possible to perform evacuation in all vacuum regions from the ultrahigh vacuum region to the atmospheric region, thereby eliminating the need for such evacuating equipment as a pre-evacuating pump. Accordingly, the present invention enables construction of a more compact, cost-effective evacuating system.

Although certain preferred embodiments of the present invention have been shown and described in detail, it should be understood that various changes and modifications may be made therein without departing from the scope of the appended claims.

## Claims

1. A compound motor comprising a plurality of motors, each motor comprising:
a stator having a stator winding; and
a rotating member that is rotatably supported on said stator;
wherein all rotating members of said motors share same axis of rotation, and the stator winding of each motor has a different number of poles.

2. A compound motor as recited in claim 1, wherein the plurality of motors are disposed along the rotational axis in order of number of poles from lowest to highest, and the stator winding of each motor is connected in parallel to a common power circuit.

3. A compound motor as recited in claim 1, wherein each rotating member is rotatably supported by bearings and can rotate independently of one another.

4. A vacuum pump having an inlet and an exhaust and comprising a plurality of motors, each motor comprising:
a stator having a stator winding;
a rotating member that is rotatably supported by bearings on said stator, and can rotate independently of one another; and
blades disposed on said rotating member for evacuation;
wherein all rotating members of said motors share same axis of rotation, and the stator winding of each motor has a different number of poles.

5. A vacuum pump as recited in claim 4, wherein all rotating members of said motors rotate independently of one another.

6. A vacuum pump as recited in claim 4, wherein; the stator winding of each motor is connected to a common power circuit.

7. A vacuum pump as recited in claim 4, wherein the plurality of motors is arranged from the inlet to the exhaust in order of number of poles from lowest to highest.

8. A vacuum pump as recited in claim 4, wherein said vacuum pump is a turbo-molecular pump.

9. A method for operating a compound motor comprising:
arranging a plurality of motors with differing numbers of stator winding poles such that the motors share the same axis of rotation;
connecting the stator windings of each motor in parallel to a single power circuit capable of supplying an exciting current to the stator windings; and
operating the plurality of motors at speed ratios fixed by differing rotational speeds of each motor by supplying an exciting current of a prescribed frequency to each motor simultaneously.
